# EUROPÄISCHE PATENTSCHRIFT

(11) **EP 3 260 304 B1**
(45) Veröffentlichungstag und Bekanntmachung des Hinweises auf die Patenterteilung: **15.01.2020**
(21) Anmeldenummer: 17172110.3
(22) Anmeldetag: 22.05.2017
(51) Int. Cl.: B60C 1/00, C08L 7/00, C08L 9/00, C08K 3/36, C08K 5/54

(54) **SCHWEFELVERNETZBARE KAUTSCHUKMISCHUNG UND FAHRZEUGREIFEN**
SULPHUR LINKABLE NATURAL RUBBER MIXTURE AND VEHICLE TYRE
MÉLANGE DE CAOUTCHOUC RÉTICULABLE AU SOUFRE ET PNEUMATIQUES

(30) Priorität: 24.06.2016 DE 102016211368
(43) Veröffentlichungstag der Anmeldung: 27.12.2017
(73) Patentinhaber: Continental Reifen Deutschland GmbH, 30165 Hannover (DE)
(72) Erfinder: Schmaunz-Hirsch, Cornelia, 31515 Wunstorf (DE); Schöffel, Julia, 30453 Hannover (DE); Recker, Carla, 30167 Hannover (DE); Schwekendiek, Kirsten, 30167 Hannover (DE); Kramer, Thomas, 32049 Herford (DE); Herzog, Katharina, 31177 Harsum (DE)
(74) Vertreter: Preusser, Andrea

(56) Entgegenhaltungen:
- EP-A1- 2 944 640
- EP-A1- 2 944 641
- WO-A1-2015/172915
- DE-A1-102014 202 748
- DE-A1-102014 209 239
- US-A1- 2015 329 571

## Beschreibung

Die Erfindung betrifft eine schwefelvernetzbare Kautschukmischung, insbesondere für die Gummierung von Festigkeitsträgern in Elastomer-Erzeugnissen, insbesondere in Fahrzeugreifen, oder inneren Bauteilen von Fahrzeugreifen, und einen Fahrzeugreifen.

Viele Elastomer-Erzeugnisse, wie Fahrzeugluftreifen, Antriebsriemen. Transportbänder o. ä., sind mit textilen oder metallischen Festigkeitsträgern, z. B. mit vermessingtem Stahlcord, verstärkt, um hohen mechanischen Beanspruchungen standzuhalten. Fahrzeugluftreifen weisen z. B. vermessingten Stahlcord im Gürtel, ggf. der Gürtelbandage, im Wulstkern, im Wulstverstärker und ggf. in der Karkasse auf. Um die Haltbarkeit des Gummi-Festigkeitsträger-Verbundes zu gewährleisten, soll die einbettende Kautschukmischung (Gummierungsmischung) eine gute Haftung zum Festigkeitsträger aufzeigen, wobei die Haftung durch Alterung und feuchte Lagerung nicht beeinträchtigt werden sollte. Auch bei anderen Bauteilen innerhalb elastomerer Erzeugnisse, die nicht direkt mit Festigkeitsträgern in Kontakt stehen, wie im Fahrzeugreifen insbesondere Laufstreifenunterplatten, Gürtelkantenstreifen oder Wulststreifen, werden die eingangs genannten Mischungssysteme mit einem Haftsystem häufig verwendet.
Die Vulkanisate sollten außerdem eine hohe dynamische und mechanische Beständigkeit und eine geringe Neigung zu Rissbildung und -wachstum aufweisen. Es hat sich beispielsweise gezeigt, dass thermische und mechanische Belastungen bei mit Festigkeitsträgern verstärkten Elastomer-Erzeugnissen zu Brüchen und Rissen in den Gummierungsmischungsmischungen führen, die letztendlich zu einer verringerten Haltbarkeit führen.

Die Haftung von Gummi zu textilen Festigkeitsträgern erfolgt über Imprägnierung (z. B. mit Resorcinformaldehydharzen in Kombination mit Kautschuklatices, RFL-Dip), im Direktverfahren mit Haftmischungen oder über Haftlösungen aus unvulkanisiertem Kautschuk mit Polyisocyanaten.

Die Gummi-Metall-Haftung kann durch Zusatz von so genannten Verstärkerharzen in der Gummierungsmischung positiv beeinflusst werden. Als Verstärkerharze sind z. B. Lignin, Phenol-Formaldehydharze mit Härter und Polymerharze bekannt. Zur Verbesserung der Gummi-Metall-Haftung ist es seit langem bekannt, Cobaltsalze und/oder ein Resorcin-Formaldehyd-Kieselsäuresystem oder ein Resorcin-Formaldehydsystem als Zusätze für die Gummierungsmischungen zu verwenden. Gummierungsmischungen mit Cobaltsalzen und einem Resorcin-Formaldehyd-Kieselsäuresystem sind z. B. aus KGK Kautschuk Gummi Kunststoffe Nr. 5/99, S. 322-328, aus GAK 8/1995, S. 536 und der EP-A-1 260 384 bekannt.

Die WO 2015172915 A1 offenbart eine Kautschukmischung enthaltend ein Silan, welches eine harnstoffhaltige Abstandsgruppe aufweist. Die Kautschukmischung gemäß der WO 2015172915 A1 ist insbesondere für Laufstreifen von Fahrzeugreifen geeignet.
Die DE102014209239 A1 und die US20150329571 A1 sowie die EP 2944640 A1 offenbaren ebenfalls Silane umfassend eine harnstoffhaltige Abstandsgruppe.

Der vorliegenden Erfindung liegt die Aufgabe zugrunde, eine schwefelvernetzbare ein Haftsystem enthaltende Kautschukmischung für die Gummierung von Festigkeitsträgern in Elastomer-Erzeugnissen, insbesondere Fahrzeugreifen, oder inneren Bauteilen von Fahrzeugreifen bereit zu stellen, die bei den Elastomer-Erzeugnissen zu einer verbesserten Haltbarkeit führen.

Gelöst wird diese Aufgabe durch eine Kautschukmischung, die die folgenden Bestandteile enthält:
- wenigstens einen Dienkautschuk und
- wenigstens ein Haftsystem, wobei das Haftsystem ein Stahlcordhaftsystem auf der Basis von organischen Cobaltsalzen und Verstärkerharzen und mehr als 2,5 phr Schwefel ist, und
- 10 bis 200 phr wenigstens einer Kieselsäure und
- 2 bis 20 phr wenigstens eines Silans mit der allgemeinen Summenformel

   I) [(R¹)₃Si-X]ₘSₙ(R²)₂₋ₘ,

   wobei die Reste R¹ innerhalb eines Moleküls gleich oder verschieden sein können und Alkoxy-Gruppen mit 1 bis 10 Kohlenstoffatomen oder zyklische Dialkoxy-Gruppen mit 2 bis 10 Kohlenstoffatomen oder Cycloalkoxygruppen mit 4 bis 10 Kohlenstoffatomen oder Phenoxygruppen oder Arylgruppen mit 6 bis 20 Kohlenstoffatomen oder Alkylgruppen mit 1 bis 10 Kohlenstoffatomen oder Alkenylgruppen mit 2 bis 20 Kohlenstoffatomen oder Aralkylgruppen mit 7 bis 20 Kohlenstoffatomen oder Halogenide sind und wobei X eine polare organische harnstoffhaltige Gruppe ist und wobei m den Wert 1 oder 2 annimmt und wobei n eine ganze Zahl von 1 bis 8 ist und wobei R² ein Wasserstoffatom oder eine Acylgruppe mit 1 bis 20 Kohlenstoffatomen ist.

Überraschenderweise zeigt die Kautschukmischung im Vergleich zum Stand der Technik eine höhere Steifigkeit bei nahezu gleichbleibenden Indikatoren für den Wärmeaufbau. Fahrzeugreifen, die die erfindungsgemäße Kautschukmischung in einer Festigkeitsträgerlage und/oder einem sonstigen inneren Bauteil enthalten, zeigen eine verbesserte Haltbarkeit.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.

Eine weitere Aufgabe der vorliegenden Erfindung besteht darin, einen Fahrzeugreifen bereitzustellen, der sich durch eine verbesserte Haltbarkeit auszeichnet. Gelöst wird diese Aufgabe dadurch, dass der Fahrzeugreifen in wenigstens einem Bauteil die erfindungsgemäße Kautschukmischung wie oben beschrieben enthält. Dabei gelten alle unten genannten Ausführungen zu den Bestandteilen der Kautschukmischung auch für den erfindungsgemäßen Fahrzeugreifen.
Bevorzugt handelt es sich bei dem Bauteil um eine Festigkeitsträgerlage, wie Gürtel, Gürtelbandage, Wulstkern, Wulstverstärker und/oder Karkasse. Die Kautschukmischung ist hierbei dann die Karkassgummierung und/oder Gürtelgummierung etc.

Weiterhin wird die erfindungsgemäße Kautschukmischung bevorzugt für andere innere Bauteile von Fahrzeugreifen, bei denen ein Haftsystem enthalten ist, wie insbesondere Laufstreifenunterplatten, Gürtelkantenstreifen oder Wulststreifen verwendet.

Eine weitere Aufgabe der vorliegenden Erfindung besteht, darin, die Haltbarkeit von Fahrzeugreifen zu verbessern. Gelöst wird diese Aufgabe erfindungsgemäß durch die Verwendung der oben beschriebenen Kautschukmischung mit allen oben genannten Ausführungsformen und Merkmalen in Fahrzeugreifen.

Unter Fahrzeugreifen werden im Rahmen der vorliegenden Erfindung alle dem Fachmann bekannten Fahrzeugreifen, wie insbesondere Fahrzeugluftreifen und Vollgummireifen, inklusive Reifen für Industrie- und Baustellenfahrzeuge, LKW-, PKW-sowie Zweiradreifen, verstanden.
Gemäß einer bevorzugten Ausführungsform der Erfindung handelt es sich um einen Fahrzeugluftreifen.
Bauteile von Fahrzeugreifen, die Festigkeitsträger enthalten sind im Rahmen der vorliegenden Erfindung insbesondere die Gürtellagen und die Karkasslage, Gürtelbandage, der Wulstkern, der Wulstkernverstärker. Bei sonstigen inneren Bauteilen, die ebenfalls ein Haftsystem aufweisen kann es sich insbesondere um eine Bandage, wie insbesondere die Gürtelbandage, und/oder eine Laufstreifenunterplatte und/oder einen Wulststreifen handeln.

Im Folgenden werden die Bestandteile der erfindungsgemäßen schwefelvernetzbaren Kautschukmischung näher beschrieben. Sämtliche Ausführungen gelten auch für den erfindungsgemäßen Fahrzeugreifen, der die erfindungsgemäße Kautschukmischung in wenigstens einem Bauteil aufweist.

Erfindungsgemäß enthält die Kautschukmischung wenigstens einen Dienkautschuk. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Der Dienkautschuk ist dabei ausgewählt aus der Gruppe bestehend aus natürlichem Polyisopren und/oder synthetischem Polyisopren und/oder epoxidiertem Polyisopren und/oder Butadien-Kautschuk und/oder Butadien-Isopren-Kautschuk und/oder lösungspolymerisiertem Styrol-Butadien-Kautschuk und/oder emulsionspolymerisiertem Styrol-Butadien-Kautschuk und/oder Styrol-Isopren-Kautschuk und/oder Flüssigkautschuken mit einem Molekulargewicht M_{w} von größer als 20000 g/mol und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydriertem AcrylnitrilbutadienKautschuk und/oder hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.

Vorzugsweise ist der Dienkautschuk ausgewählt aus der Gruppe, bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk.

Gemäß einer bevorzugten Weiterbildung der Erfindung werden in der Kautschukmischung wenigstens zwei verschiedene Dienkautschuk-Typen eingesetzt.

Gemäß einer bevorzugten Ausführungsform der Erfindung enthält die erfindungsgemäße Kautschukmischung 0 bis 30 phr, bevorzugt 5 bis 30 phr, wenigstens eines Butadien-Kautschuks und 70 bis 100 phr, bevorzugt 70 bis 95 phr, wenigstens eines natürlichen und/oder synthetischen Polyisoprens. Eine derartige Kautschukmischung zeigt insbesondere als Gummierungsmischung von Festigkeitsträgern, wie als Gürtelgummierung und/oder Karkassgummierung von Fahrzeugreifen, gute Eigenschaften, wie beispielsweise hinsichtlich der Verarbeitbarkeit und/oder des Wärmeaufbaus (Rollwiderstand) und/oder der Reißeigenschaften.

Die erfindungsgemäße Kautschukmischung enthält 10 bis 200 phr, bevorzugt 20 bis 180 phr, besonders bevorzugt 40 bis 150 phr, ganz besonders bevorzugt 40 bis 110 phr, wiederum bevorzugt 40 bis 80 phr, wenigstens einer Kieselsäure.
Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, besonders bevorzugt von 70 bis 235 m²/g und ganz besonders bevorzugt von 70 bis 205 m²/g, und eine CTAB-Oberfläche (gemäß ASTM D 3765) von 30 bis 400 m²/g, bevorzugt von 30 bis 255 m²/g, besonders bevorzugt von 65 bis 230 m²/g und ganz besonders bevorzugt von 65 bis 200 m²/g, aufweist.
Derartige Kieselsäuren führen z. B. in Kautschukmischungen für innere Reifenbauteile zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch Kieselsäuren mit einer vergleichsweise niedrigen BET-Oberfläche (wie z. B. Zeosil® 1115 oder Zeosil® 1085 der Firma Solvay) als auch hoch dispergierbare Kieselsäuren, so genannte HD-Kieselsäuren (z. B. Zeosil® 1165 MP der Firma Solvay).

Erfindungswesentlich ist es, dass die Kautschukmischung ein Silan enthält, welches die allgemeine Summenformel

I) [(R¹)₃Si-X]ₘSₙ(R²)₂₋ₘ aufweist,

wobei die Reste R¹ innerhalb eines Moleküls gleich oder verschieden voneinander sein können und Alkoxy-Gruppen mit 1 bis 10 Kohlenstoffatomen oder zyklische Dialkoxy-Gruppen mit 2 bis 10 Kohlenstoffatomen oder Cycloalkoxygruppen mit 4 bis 10 Kohlenstoffatomen oder Phenoxygruppen oder Arylgruppen mit 6 bis 20 Kohlenstoffatomen oder Alkylgruppen mit 1 bis 10 Kohlenstoffatomen oder Alkenylgruppen mit 2 bis 20 Kohlenstoffatomen oder Aralkylgruppen mit 7 bis 20 Kohlenstoffatomen oder Halogenide sind,
und wobei X eine polare organische harnstoffhaltige Gruppe ist
und wobei m den Wert 1 oder 2 annimmt
und wobei n eine ganze Zahl von 1 bis 8 ist
und wobei R² eine Acylgruppe mit 1 bis 20 Kohlenstoffatomen oder ein Wasserstoffatom ist.
Zyklische Dialkoxy-Gruppen sind Derivate von Diolen.

Dieses Silan gemäß Formel I) dient dabei in der erfindungsgemäßen Kautschukmischung
a) als Kupplungsagens zur Anbindung der in der Kautschukmischung enthaltenen Kieselsäure an die Polymerketten des Dienkautschuks bzw. der Dienkautschuke und/oder
b) zur Oberflächenmodifikation von Kieselsäure durch Anbindung an die Kieselsäure-Partikel ohne Anbindung an die Polymerketten.

Silan-Kupplungsagenzien sind allgemein bekannt und reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Einige Silane können zudem an Polymerketten der Kautschuk(e) anbinden.

In der erfindungsgemäßen Kautschukmischung ersetzt das oben genannte Silan ganz oder teilweise die im Stand der Technik bekannten Silane wie TESPD (3,3'-Bis(triethoxysilylpropyl)disulfid) oder TESPT (3,3'-Bis(triethoxysilylpropyl)tetrasulfid) oder Octyltriethoxysilane (z.B. Si208®, Fa. Evonik) oder Mercaptosilanen, wie 3-Mercaptopropyltriethoxysilan (z.B. Si263®, Fa. Evonik), oder geblockten Mercaptosilanen, wie 3-Octanoylthio-1-propyltriethoxysilan (z.B. NXT-Silan, Fa. Momentive), bei einer gleichzeitigen Erhöhung der Steifigkeit ohne das sich Nachteile hinsichtlich des Rollwiderstandsverhaltens zeigen.

Es ist im Rahmen der vorliegenden Erfindung auch denkbar, dass das oben genannte Silan mit der allgemeinen Summenformel I) in Kombination mit einem oder mehreren Silanen aus dem Stand der Technik eingesetzt wird.

Das Silan mit der allgemeinen Summenformel I) ist in Mengen von 2 bis 20 phr, bevorzugt 2 bis 15 phr, besonders bevorzugt 5 bis 15 phr, in der erfindungsgemäßen Kautschukmischung enthalten.

Erfindungswesentlich ist es, dass das Silan mit der oben genannten Summenformel I) eine polare organische harnstoffhaltige Gruppe X aufweist. Diese polare harnstoffhaltige Gruppe X verknüpft das oder die Siliziumatom(e) mit einem Schwefelatom der Gruppierung Sₙ.
In der Fachwelt wird eine derartige verknüpfende Gruppe auch Spacer genannt, da sie den Abstand zwischen Silizium (Anbindung an den Füllstoff) und Schwefel (Anbindung an den Dienkautschuk) bestimmt.

Die im Stand der Technik bekannten organischen Spacer enthalten üblicherweise einen oder mehrere Propyl-Reste (oder auch eine Propyl-Gruppe genannt) wie es z.B. in den oben aufgeführten Silanen TESPD und TESPT und Mercaptosilanen und NXT-Silanen üblich ist.

Mit der erfindungsgemäßen Kautschukmischung wurde gefunden, dass unter Verwendung eines Silans mit einem polaren harnstoffhaltigen Spacer X anstatt eines Silanes aus dem Stand der Technik in Kombination mit einem Haftsystem eine erhöhte Steifigkeit der Kautschukmischung bei gleichzeitig sehr guten Indikatoren für den Wärmeaufbau erzielt wird. Hierdurch wird insbesondere bei der Verwendung als Gummierungsmischung von Festigkeitsträgern oder sonstigen inneren Bauteilen von Fahrzeugreifen eine erhöhte Haltbarkeit erzielt.

Dabei ist unter "polare organische harnstoffhaltige Gruppe X" zu verstehen, dass diese eine unverzweigte, verzweigte oder zyklische Kohlenwasserstoffgruppe ist, die wenigstens eine polare organische Harnstoff- Funktionalität aufweist.
Durch die Heteroatome der wenigstens einen Harnstoff-Funktionalität, wie Sauerstoff (O), Stickstoff (N), ergibt sich im Vergleich zu Kohlenwasserstoff-Resten ohne Heteroatome, wie Alkyl-Gruppen, eine größere Polarität innerhalb des Moleküls, wodurch sich im Rahmen der vorliegenden Erfindung die Bezeichnung "polare" ergibt. KohlenwasserstoffReste ohne Heteroatome werden in der Fachwelt allgemein als unpolar eingestuft.
Der Ausdruck "polare" ist als zusätzliche Beschreibung der Gruppe X zu verstehen, wobei das erfindungswesentliche Merkmal "hamstoffhaltig" ist.

Die oben genannte Beschreibung der polaren organischen harnstoffhaltigen Funktionalitäten ist derart zu verstehen, dass die wenigstens eine im kohlenwasserstoffhaltigen Rest gebundene Harnstoff-Funktionalität durch die Anbindung an den kohlenwasserstoffhaltigen Rest als Harnstoff-Derivat vorliegt, sodass die polare organische Gruppe wenigstens eine folgende polare Funktionalität aufweist:

II) -(H)N-CO-N(H)-.

Somit ist die Gruppe II) direkt oder über Reste R (organische Kohlenwasserstoffgruppe wie unten beschrieben) zur einen Seite an die Sₙ-Gruppe geknüpft und zur anderen Seite direkt oder über Reste R (organische Kohlenwasserstoffgruppe wie unten beschrieben) an das Siliziumatom der (R¹)₃Si-Gruppe. Die Reste R können auf beiden Seiten gleich oder verschieden voneinander sein.

In einer bevorzugten Ausführungsform der Erfindung weist die polare organische harnstoffhaltige Gruppe X wenigstens ein Harnstoff-Derivat gemäß Formel II) als polare Funktionalität auf, welches an den beiden Stickstoffatomen eine organische Kohlenwasserstoffgruppe R mit 1 bis 30 Kohlenstoffatomen, bevorzugt 1 bis 20 Kohlenstoffatomen, besonders bevorzugt 1 bis 10 Kohlenstoffatomen, ganz besonders bevorzugt 1 bis 7 Kohlenstoffatomen, insbesondere bevorzugt 2 oder 3 Kohlenstoffatomen, trägt, wobei die Gruppe zwischen dem einen Stickstoff der harnstoffhaltigen Gruppe und dem Schwefel der Sₙ-Gruppe aliphatisch, bevorzugt eine Alkylgruppe, ist und die Gruppe zwischen dem zweiten Stickstoffatom der harnstoffhaltigen Gruppe und dem Siliziumatom der (R¹)₃Si-Gruppe sowohl aliphatisch als auch aromatisch sein kann. Die Reste R können somit auf beiden Seiten gleich oder verschieden voneinander sein.

In einer weiteren bevorzugten Ausführungsform der Erfindung weist die polare organische harnstoffhaltige Gruppe X wenigstens ein Harnstoff-Derivat gemäß Formel II) als polare Funktionalität auf, welches an den beiden Stickstoffatomen eine organische Kohlenwasserstoffgruppe trägt, wobei die Gruppe (organische Kohlenwasserstoffgruppe) zwischen dem einen Stickstoff der harnstoffhaltigen Gruppe und dem Schwefel der Sₙ-Gruppe aliphatisch, besonders bevorzugt eine Alkylgruppe, ist und die Gruppe zwischen dem zweiten Stickstoffatom der harnstoffhaltigen Gruppe und dem Siliziumatom der (R¹)₃Si-Gruppe aliphatisch, besonders bevorzugt eine Alkylgruppe, ist.

Besonders bevorzugt sind somit das Stickstoffatom und das Siliziumatom der (R¹)₃Si-Gruppe über eine Alkylgruppe und das andere Stickstoffatom und das Schwefelatom der Sₙ-Gruppe ebenfalls über eine Alkylgruppe miteinander verknüpft. Hierbei kann es sich bei den beiden Gruppen um den gleichen Alkylrest oder voneinander verschiedene Alkylreste (z.B. unterschiedliche Zahl von Kohlenstoffatomen) handeln.
Hiermit werden im Vergleich zum Stand der Technik besonders hohe Steifigkeiten und Zugfestigkeiten und/oder sogar verbesserte Rollwiderstandsindikatoren der Kautschukmischung erzielt. Stand der Technik ist hier die JP2002201312A, in der Agenzien mit aromatischen Spacern enthaltend eine stickstoffhaltige organische Funktionalität offenbart werden, die im Vergleich zu anderen Silanen geringere Steifigkeiten und geringere Zugfestigkeiten aufweisen.

Gemäß Römpp Online Lexikon, Version 4.0 sind "aliphatische Verbindungen" "funktionalisierte oder unfunktionalisierte organische Verbindungen, die kein aromatisches Ringsystem ... enthalten."

Gemäß einer bevorzugten Ausführungsform der Erfindung handelt es sich bei X um einen 1-Ethyl-3-Propyl-Harnstoff-Rest. Hierbei ist im Rahmen der vorliegenden Erfindung zwischen dem ersten Stickstoffatom der Harnstoff-Funktionalität und dem Si-Atom die Propyl-Gruppe und zwischen dem zweiten Stickstoffatom der Harnstoff-Funktionalität und dem S-Atom der Sₙ-Gruppe die Ethyl-Gruppe angeordnet. Dies gilt bevorzugt für alle Ausführungsformen der vorliegenden Erfindung.
Es ist jedoch für die Lösung der zugrunde liegenden technischen Aufgabe prinzipiell auch denkbar, dass die Ethyl- und Propyl-Reste umgekehrt zwischen Harnstoff und Si bzw. Harnstoff und S-Atom angeordnet sind.

Neben wenigstens einer wie oben beschriebenen Harnstoff-Funktionalität kann die Gruppe X an den wie oben beschriebenen organischen Kohlenwasserstoffgruppen (Reste R) mit F-, Cl-, Br-, I-, CN- oder HS- substituiert sein.

Die an das Siliziumatom gebundenen Reste R¹ sind Alkoxy-Gruppen mit 1 bis 10 Kohlenstoffatomen, bevorzugt Methoxy- oder Ethoxygruppen, oder zyklische Dialkoxy-Gruppen mit 2 bis 10 Kohlenstoffatomen oder Cycloalkoxygruppen mit 4 bis 10 Kohlenstoffatomen oder Phenoxygruppen oder Arylgruppen mit 6 bis 20 Kohlenstoffatomen, bevorzugt Phenyl, oder Alkylgruppen mit 1 bis 10 Kohlenstoffatomen, bevorzugt Methyl- oder Ethylgruppen, oder Alkenylgruppen mit 2 bis 20 Kohlenstoffatomen oder Aralkylgruppen mit 7 bis 20 Kohlenstoffatomen oder Halogenide, bevorzugt Chloride (R¹ = Cl), und können innerhalb eines Moleküls gleich oder verschieden voneinander sein.

Es ist dabei auch denkbar, dass eine zyklische Dialkoxy-Gruppe (das Derivat eines Diols) so angebunden ist, dass es mit beiden Sauerstoffatomen an das Siliziumatom gebunden ist und somit als zwei angebundene Reste R¹ zählt, wobei der weitere Rest R¹ ausgewählt ist aus den oben genannten Möglichkeiten.
Bevorzugt handelt es sich bei R¹ jedoch um Methoxy- und/oder Ethoxy-Gruppen. Besonders bevorzugt sind alle drei Reste R¹ gleich und Methoxy- und/oder Ethoxy-Gruppen und ganz besonders bevorzugt drei Ethoxy-Gruppen.

Der Index m kann die Werte 1 oder 2 annehmen. Somit kann die Gruppe

III) [(R¹)₃Si-X]

einmal oder zweimal pro Molekül vorhanden sein. Im Fall von m = 2 ist der Schwefel also nur an zwei dieser Gruppen gebunden, sodass in diesem Fall kein Rest R² im Molekül vorhanden ist. Die beiden Gruppen III) sind dann über die Gruppierung Sₙ mit n = 1 bis 8 verknüpft, also über ein Schwefelatom oder eine Kette von 2 bis 8 Schwefelatomen. Bevorzugt ist n eine ganze Zahl von 1,4 bis 6, besonders bevorzugt von 1,6 bis 4. Hiermit ergeben sich besonders gute Eigenschaften im Hinblick auf die Steifigkeit und das Vulkanisationsverhalten, insbesondere die Ausvulkanisationszeit.
Die Bestimmung des Schwefelgehaltes (Wert für n) erfolgt mittels ¹H-NMR.

Für den Fall, dass m = 1 ist, ist ein Rest R² an das von der Silyl-Gruppe am weitesten entfernte Schwefelatom gebunden. R² ist ein Wasserstoffatom oder eine Acylgruppe mit 1 bis 20 Kohlenstoffatomen. Handelt es sich bei dem Rest R² um eine Acylgruppe, so ist bevorzugt das Kohlenstoffatom, welches die Keto-Gruppe, also die Doppelbindung zum Sauerstoffatom, trägt an das von der Silyl-Gruppe am weitesten entfernte Schwefelatom gebunden.
Gemäß einer bevorzugten Ausführungsform handelt es sich bei der Acylgruppe um einen Acetyl-Rest, also die Gruppierung -CO-CH₃.
Unter Silyl-Gruppe wird im Rahmen der vorliegenden Erfindung die Gruppierung

IV) (R¹)₃Si-

verstanden.

Damit kann es sich bei dem Silan entweder um ein Mercaptosilan oder ein geschütztes Mercaptosilan, auch geblocktes Mercaptosilan genannt, handeln.

Gemäß einer bevorzugten Ausführungsform der Erfindung enthält die erfindungsgemäße Kautschukmischung ein Silan mit der folgenden Struktur:

V) [(R¹)₃Si-X]₂Sₙ

In der oben genannten Summenformel I) ist
m somit gleich 2, sodass die Gruppierung Sₙ an beiden Seiten an eine Gruppierung

III) [(R¹)₃Si-X]

geknüpft ist.
Besonders bevorzugt sind die polaren harnstoffhaltigen Gruppen X und die Reste R¹ auf beiden Seiten des Moleküls gleich.
Hierbei ist R¹ besonders bevorzugt eine Ethoxy-Gruppe, die dann insgesamt sechsmal im Molekül vorhanden ist.
Bevorzugt ist X auf beiden Seiten ein 1-Ethyl-3-Propyl-Harnstoff-Rest.

Gemäß einer bevorzugten Ausführungsform ist m = 2 und n gleich 1,8 bis 2,3, sodass ein Gemisch von Silanen mit verschiedenen Ketten an Schwefelatomen vorliegt. Bevorzugt ist in diesem Gemisch zu mehr als 50 Gew.-%, bevorzugt 70 bis 100 Gew.-%, das Disilan enthalten mit n = 2. Das bevorzugt enthaltene Silan hat also die folgende Struktur VI):

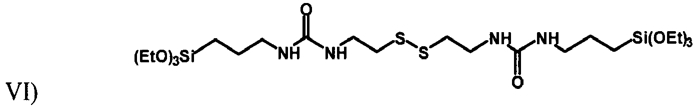

Hierbei ist jeweils ein Schwefelatom an jeweils eine der Ethyl-Gruppen der beiden 1-Ethyl-3-Propyl-Harnstoff-Reste gebunden.

Mit diesem Silan werden besonders gute Steifigkeiten bei gleichbleibendem Wärmeaufbau erzielt.
Dieses Silan kann beispielsweise durch Umsetzung von Cystamindihydrochlorid mit 3-Isocyanatopropyltriethoxysilan in Wasser mit Zusatz wenigstens einer Base, beispielsweise eine 50%-ige KOH-Lösung (KOH=Kaliumhydroxid) erhalten werden.

Die Analyse der beschriebenen Silane der Ausführungsformen gemäß Formel I) erfolgt mittels ¹³C-NMR, ¹H-NMR und ²⁹Si-NMR.

Gemäß einer weiteren bevorzugten Ausführungsform ist m = 2 und n eine ganze Zahl von 2 bis 8, besonders bevorzugt 3 oder 4, wobei alle übrigen Reste bevorzugt wie in Formel VI) ausgeführt sind.
Hierbei kann in der erfindungsgemäßen Kautschukmischung auch ein Gemisch an Silan-Molekülen mit unterschiedlichen Werten für n enthalten sein. Zum Beispiel kann die Kautschukmischung (analog zu obigen Ausführungen) ein Gemisch aus den Silanen mit n = 2 und/oder n = 3 und n = 4 aufweisen.
Ein derartiges Silan mit 64 Mol-% S₄-Anteil (mit < 5 Mol-% Sₓ, wobei x in diesem Fall > 4 ist) und 36 Mol-% S₂-Anteil kann beispielsweise durch Reaktion von 3-Aminopropyltriethoxysilan mit 2-Chlorethylisocyanat in Ethanol und anschließender Umsetzung mit Natriumpolysulfid (Na₂S₄) erhalten werden.

Gemäß einer weiteren bevorzugten Ausführungsform der Erfindung ist n = 1 und m = 2, sodass ein Monosulfansilan vorliegt.
Alle anderen Reste sind bevorzugt wie in Formel VI) ausgeführt, d.h. R¹ = Ethoxy (EtO) und X = 1-Ethyl-3-Propyl-Harnstoff-Rest.
Dieses Silan kann durch Reaktion von 3-Aminopropyltriethoxysilan mit 2-Chlorethylisocyanat in Ethanol und anschließender Umsetzung mit Natriumsulfid (Na₂S) erhalten werden.
Überraschenderweise zeigt sich auch mit einem Monosulfan (mit n = 1 und m = 2) im Vergleich zu einem nicht an Polymere anbindenden Silan aus dem Stand der Technik eine Erhöhung der Steifigkeit bei gleichbleibenden oder sogar verbesserten Indikatoren für den Rollwiderstand.

Gemäß einer weiteren Ausführungsform ist das Silan gemäß Formel I) ein Mercaptosilan. Hierbei ist m = 1, und R² = H, und n = 1.
X ist auch hier bevorzugt ein 1-Ethyl-3-Propyl-Harnstoff-Rest, wobei sich zwischen dem ersten Stickstoffatom der Harnstoff-Funktionalität und dem Si-Atom die Propyl-Gruppe befindet und zwischen dem zweiten Stickstoffatom der Harnstoff-Funktionalität und dem S-Atom die Ethyl-Gruppe. Dieses Silan kann durch Reaktion von NaSH in Ethanol (durch Einleiten von H₂S in eine Natriumethanolat-Lösung hergestellt aus Natrium und Ethanol) mit dem Halogensilan (EtO)₃Si-CH₂CH₂CH₂-NH-CO-NH-CH₂CH₂-Cl in Ethanol erhalten werden.

Gemäß einer weiteren Ausführungsform ist das Silan gemäß Formel I) ein geblocktes Mercaptosilan. Hierbei ist m = 1, und R² = eine Acylgruppe mit 1 bis 20 Kohlenstoffatomen (Alkanoyl-Rest), bevorzugt ein Acetyl-Rest (-CO-CH₃), und n = 1. X ist auch hier bevorzugt ein 1-Ethyl-3-Propyl-Harnstoff-Rest, wobei sich zwischen dem ersten Stickstoffatom der Harnstoff-Funktionalität und dem Si-Atom die Propyl-Gruppe befindet und zwischen dem zweiten Stickstoffatom der Harnstoff-Funktionalität und dem S-Atom die Ethyl-Gruppe. Dieses Silan kann durch Reaktion von 3-Aminopropyltriethoxysilan mit 2-Chlorethylisocyanat in Ethanol und anschließender Umsetzung mit Kaliumthioacetat erhalten werden.

Die erfindungsgemäße Kautschukmischung kann neben Kieselsäure noch weitere bekannte polare und/oder unpolare Füllstoffe, wie z.B. Ruß, enthalten.

Enthält die erfindungsgemäße Kautschukmischung Ruß, wird bevorzugt ein Ruß eingesetzt, der eine Jodadsorptionszahl gemäß ASTM D 1510 von 30 g/kg bis 250 g/kg, bevorzugt 30 bis 180 g/kg, besonders bevorzugt 40 bis 180 g/kg, und ganz besonders bevorzugt 40 bis 130 g/kg, und eine DBP-Zahl gemäß ASTM D 2414 von 60 bis 200 ml/100 g, bevorzugt 70 bis 200 ml/100g, besonders bevorzugt 90 bis 150 ml/100g, aufweist.

Die Menge an Ruß in der erfindungsgemäßen Kautschukmischung beträgt bevorzugt 0 bis 50 phr, besonders bevorzugt 0 bis 20 phr und ganz besonders bevorzugt 0 bis 7 phr, in einer bevorzugten Ausführungsform wenigstens aber 0,1 phr.
In einer besonders bevorzugten Ausführungsform der Erfindung enthält die Kautschukmischung 0,1 bis 7 phr Ruß.
In einer weiteren bevorzugten Ausführungsform der Erfindung enthält die Kautschukmischung 0 bis 0,5 phr Ruß.

Weiterhin ist es denkbar, dass die Kautschukmischung Kohlenstoffnanoröhrchen (carbon nanotubes (CNT) inklusive diskreter CNTs, sogenannten hollow carbon fibers (HCF) und modifizierter CNT enthaltend eine oder mehrere funktionelle Gruppen, wie Hydroxy-, Carboxy und Carbonyl-Gruppen) enthält.
Auch Graphit und Graphene sowie sogenannte "carbon-silica dual-phase filler" sind als Füllstoff denkbar.
Die Kautschukmischung kann außerdem noch andere polare Füllstoffe, wie beispielsweise Alumosilicate, Kreide, Stärke, Magnesiumoxid, Titandioxid oder Kautschukgele enthalten.

Die erfindungsgemäße Kautschukmischung enthält wenigstens ein Haftsystem, wobei das Haftsystem ein Stahlcordhaftsystem auf der Basis von organischen Cobaltsalzen und Verstärkerharzen und mehr als 2,5 phr Schwefel ist.
Die Kautschukmischung soll zur Gummierung für metallische Festigkeitsträger eingesetzt werden, wodurch ein Haftsystem für die Gummi-Metall-Haftung zur Anwendung kommt. Gleiches gilt für die inneren Bauteile, die keine Festigkeitsträger aufweisen, aber im Reifen benachbart zu einem Bauteil mit metallischen Festigkeitsträgern angeordnet sind. Ein inneres Bauteil, wie das Gürtelpolster eines LKW-oder PKW-Reifens, ist beispielsweise benachbart zu der Gürtellage, die Stahl enthält; im Gürtelpolster ist dann bevorzugt ebenfalls ein Haftsystem für die Gummi-Metall-Haftung enthalten, also wie in der Gürtelgummierung.

Gemäß einer bevorzugten Weiterbildung der Erfindung handelt es sich bei den Festigkeitsträgern um metallische Festigkeitsträger. Die Verbesserung der Haftung und des Rissverhaltens wirkt sich besonders vorteilhaft bei metallischen Festigkeitsträgern aus, da diese bei Haftungsverlust und Rissbildung verstärkt der Korrosion ausgesetzt sind, was die Lebensdauer der Elastomer-Erzeugnisse, insbesondere Fahrzeugluftreifen, stark beeinträchtigt.

Wird die Kautschukmischung zur Gummierung von metallischen Festigkeitsträgern, insbesondere Stahlcord, eingesetzt, wird erfindungsgemäß ein Stahlcordhaftsystem auf der Basis von organischen Cobaltsalzen und Verstärkerharzen und mehr als 2,5 phr Schwefel verwendet.

Die organischen Cobaltsalze werden üblicherweise in Mengen von 0,2 bis 2 phr eingesetzt. Als Cobaltsalze können z. B. Cobaltstearat, -borat, -borat-alkanoate, -naphthenat, - rhodinat, -octoat, -adipat usw. verwendet werden. Als Verstärkerharze können Resorcin-Formaldehyd-Harze, beispielsweise Resorcin-Hexamethoxymethylmelamin-Harze (HMMM) oder Resorcin-Hexamethylentetramin-Harze (HEXA), oder modifizierte Phenolharze, beispielsweise Alnovol®-Typen, eingesetzt werden. Von den Resorcin-Harzen können auch die Vorkondensate eingesetzt werden.

Es können in der Kautschukmischung 0 bis 100 phr, bevorzugt 0,1 bis 80 phr, besonders bevorzugt 0,1 bis 70 phr und ganz besonders bevorzugt 0,1 bis 50 phr, zumindest eines Weichmachers vorhanden sein. Hierzu gehören alle dem Fachmann bekannten Weichmacher wie aromatische, naphthenische oder paraffinische Mineralölweichmacher, wie z.B. MES (mild extraction solvate) oder TDAE (treated distillate aromatic extract), oder Rubber-to-Liquid-Öle (RTL) oder Biomass-to-Liquid-Öle (BTL) oder Faktisse oder Weichmacherharze oder Flüssig-Polymere (wie Flüssig-BR), deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern.
Mineralöle sind als Weichmacher besonders bevorzugt.
Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.
Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure),
c) Wachse,
d) Mastikationshilfsmittel, wie z. B. 2,2'-Dibenzamidodiphenyldisulfid (DBD) und
e) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).
Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch so genanntes nano-Zinkoxid mit einer BET-Oberfläche von 10 bis 60 m²/g verwendet werden. Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Vulkanisation wird in Anwesenheit von Schwefel oder Schwefelspendern mit Hilfe von Vulkanisationsbeschleunigern durchgeführt, wobei einige Vulkanisationsbeschleuniger zugleich als Schwefelspender wirken können. Schwefel oder Schwefelspender sowie ein oder mehrere Beschleuniger werden im letzten Mischungsschritt in den genannten Mengen der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigem und/oder Thiocarbamatbeschleunigem und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.
DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer Bestandteilen des Vulkanisationssystems wie Schwefel und Vulkanisationsbeschleuniger hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.
Bevorzugt wird die erfindungsgemäße Kautschukmischung als Gummierungsmischung von Festigkeitsträgern einer oder mehreren Festigkeitsträgerlagen von Fahrzeugreifen eingesetzt, wie z.B. als Karkassgummierung und/oder Gürtelgummierung und/oder Gummierung der Gürtelbandage und/oder Gummierung im Wulstkern und/oder Wulstverstärker.
Weiterhin wird die erfindungsgemäße Kautschukmischung bevorzugt in einem inneren Reifenbauteil verwendet, bei dem ebenfalls die Haftung an die umgebenden Bauteile für die Haltbarkeit des Reifens, insbesondere im Fahrbetrieb, relevant ist, wie bevorzugt Laufstreifenunterplatten, Gürtelkantenstreifen und/oder Wulststreifen.

Die Kautschukmischung ist weiterhin zur Herstellung von technischen Kautschukartikeln wie z.B. Transportbändern, Riemen, Gurten, Schläuchen, Drucktüchern, Luftfedern oder Dämpfungselementen, oder Schuhsohlen geeignet.

Die Erfindung soll nun anhand von Vergleichs- und Ausführungsbeispielen, die in Tabelle 1 zusammengefasst sind, näher erläutert werden.
Die Vergleichsmischungen sind mit V, die erfindungsgemäßen Mischungen sind mit E gekennzeichnet.
Die Mischungsherstellung erfolgte nach dem in der Kautschukindustrie üblichen Verfahren unter üblichen Bedingungen in zwei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. Durch Zugabe des Vulkanisationssystems in der zweiten Stufe (Fertigmischstufe) wurde die Fertigmischung erzeugt, wobei für 180 bis 300 Sekunden bei 90 bis 120 °C gemischt wurde.

Das allgemeine Verfahren zur Herstellung von Kautschukmischungen und deren Vulkanisate ist in "Rubber Technology Handbook", W. Hofmann, Hanser Verlag 1994 beschrieben.

Aus sämtlichen Mischungen wurden Prüfkörper durch Vulkanisation nach t₉₅ (gemessen am Moving Disc Rheometer gemäß ASTM D 5289-12/ ISO 6502) unter Druck bei 160°C hergestellt und mit diesen Prüfkörpern für die Kautschukindustrie typische Materialeigenschaften mit den im Folgenden angegebenen Testverfahren ermittelt.
- Shore-A-Härte bei Raumtemperatur (RT) gemäß DIN ISO 7619-1
- Rückprallelastizität bei RT gemäß DIN 53 512
- dynamischer Speichermodul E' bei 55 °C gemäß ISO 4664-1 bei 0,15 % Dehnung und bei 8% Dehnung
- Verlustfaktor tan d, synonym zu tan δ, aus dynamisch-mechanischer Messung, Temperaturdurchlauf ("temperature sweep"); Berechnung des Dynamischen Moduls E*ₖₒᵣᵣ nach DIN53513 (1978), Konditionierung: 20% +/- 14%, Frequenz 10 Hz, Temperaturbereich -80°C - -100°C, Heizrate 1,6 K/min, Statische Vordehnung 10%, Dynamische Dehnung 0,2%
- Zugfestigkeit und Spannungswert bei 100% (Modul 100, M100) sowie 300% statischer Dehnung (Modul 300, M300) bei Raumtemperatur gemäß DIN 53 504

### Verwendete Substanzen

a) BR: Polybutadien, Hoch-cis Nd-BR, unfunktionalisiert, T_{g} = -105 °C, BUNA® CB25, Fa. Lanxess
b) Kieselsäure: Hi-Sil ™ 160G, PPG Silica Products
c) Silan TESPT, 50 % auf Ruß
d) Silan gemäß Struktur VI) mit polarem organischem harnstoffhaltigem Spacer:

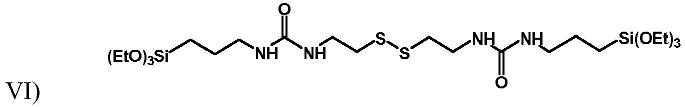

Hierbei ist gemäß Formel VI): n = 2; R¹ = (EtO); X = 1-Ethyl-3-Propyl-Harnstoff; m = 2; hergestellt durch unten genanntes Verfahren E)

### Herstellung des Silans

Herstellung des Silans gemäß Formel VI) [(EtO)₃Si-(CH₂)₃-NH-C(=O)-NH-(CH₂)₂-S-]₂ in Wasser (ohne Hexan-Waschung):
In einem mit N₂ gespülten 1L Doppelmantel-Vierhalskolben mit KPG-Rührer, Rückflusskühler, Innenthermometer und Tropftrichter wird Cystamindihydrochlorid (108,39 g, 0,47 mol, 1.00 eq) vorgelegt und in VE-Wasser (382 mL) gelöst. Mittels Tropftrichter wird 50%ige KOH-Lösung (92,31 g, 0,82 mol, 1,75 eq) bei 15-23°C zudosiert und für 30 min gerührt. Nun wird 3-Isocyanatopropyltriethoxysilan (221,05 g, 0,85 mol, 1,8 eq) so zudosiert, dass eine Innentemperatur von 30°C nicht überschritten wird. Danach wird eine Stunde bei 24°C gerührt. Die weiße Suspension wird über Druck filtriert, mit drei Portionen VE-Wasser (340 mL gesamt) gespült und mit trockenem N₂ für 2 h getrocknet. Der Filterkuchen wird im Rotationsverdampfer für 7 h bei 35°C und 166 mbar, für 10 h bei 35°C und 150 mbar und für 9 h bei 35°C und 100 mbar im N₂-Strom getrocknet.

Das Produkt [(EtO)₃Si-(CH₂)₃-NH-C(=O)-NH-(CH₂)₂-S-]₂ ist ein feines, weißes Pulver (246,38 g, 90,7% d.Th. = der Theorie; Theorie entspricht maximal möglicher Ausbeute); ¹H-NMR (δₚₚₘ, 500 MHz, DMSO-d6): 0.52 (4H, t), 1.14 (18H, t), 1.42 (4H, m), 2.74 (4H, m), 2.96 (4H, m), 3.29 (4H, m), 3.74 (12H, q), 6.05 (4H, m);
¹³C-NMR (δₚₚₘ, 125 MHz, DMSO-d6): 7.3 (2C), 18.2 (6C), 23.5 (2C), 38.5 (2C), 39.6 (2C), 42.0 (2C), 57.7 (6C) 157.9 (2C).
²⁹Si-NMR (δₚₚₘ, 100 MHz, DMSO-d6): -45.3 (100% Silan);
lösliche Anteile in d6-DMSO unter Verwendung von internem Standard TPPO: 86,0%;
Wassergehalt (DIN 51777): 0,7%;
Schmelzbeginn: 97°C;
Restgehalt Isocyanat: 0,08%

Wie aus Tabelle 1 anhand des Vergleiches E1 vs. V1 (molgleicher Austausch des Silans) zu erkennen ist, weisen die erfindungsgemäßen Kautschukmischungen eine deutlich höhere Steifigkeit auf, was sich in den erhöhten Werten Modul 100, Modul 300 sowie E' (bei 0,15 % Dehnung) und E' (bei 8 % Dehnung) zeigt. Gleichzeitig weist die erfindungsgemäße Kautschukmischung E1 einen geringeren Verlustfaktor tan d auf, insbesondere bei für den Wärmeaufbau relevanten Temperaturen wie 55 °C und 80 °C. Hieraus ergibt sich für die Anwendung der erfindungsgemäßen Kautschukmischung in Fahrzeugreifen, insbesondere in inneren Bauteilen von Fahrzeugluftreifen, eine verbesserte Haltbarkeit der Reifen.

**Tabelle 1**

| **Bestandteile** | **Einheit** | **V1** | **E1** |
|---|---|---|---|
| NR TSR | phr | 80 | 80 |
| BR ^{a)} | phr | 20 | 20 |
| Kieselsäure ^{b)} | phr | 60 | 60 |
| Silan ^{c)} | phr | 10,3 | - |
| Silan ^{d)} | phr | - | 6,2 |
| Ruß N339 | phr | - | 5,15 |
| Weichmacher & Prozesshilfsmittel | phr | 12 | 12 |
| Alterungsschutzm. | phr | 3,75 | 3,75 |
| organisches Cobaltsalz | phr | 0,36 | 0,36 |
| Resorcinol | phr | 2,5 | 2,5 |
| Harz aus Resorcin und Formaldehydspender | phr | 3,85 | 3,85 |
| ZnO | phr | 8 | 8 |
| Beschleuniger DCBS | phr | 1,5 | 1,5 |
| Schwefel | phr | 4,3 | 4,9 |

| **Physikalische Eigenschaften** | | | |
|---|---|---|---|
| Shore Härte b. RT | Shore A | 83 | 90 |
| Rückprallelast. b. RT | % | 38 | 38 |
| Zugfestigkeit | MPa | 20 | 18 |
| Modul 100 | MPa | 4,5 | 6,3 |
| Modul 300 | MPa | 14,6 | 17,6 |
| E' (0,15%) | MPa | 24 | 36 |
| E' (8%) | MPa | 10,5 | 15 |
| Tan δ (-15 °C) | | 0,288 | 0,257 |
| Tan δ (0 °C) | | 0,203 | 0,186 |
| Tan δ (20 °C) | | 0,163 | 0,153 |
| Tan δ (55 °C) | | 0,12 | 0,113 |
| Tan δ (80 °C) | | 0,096 | 0,094 |

## Patentansprüche

1. Schwefelvernetzbare Kautschukmischung enthaltend
- wenigstens einen Dienkautschuk und
- wenigstens ein Haftsystem, wobei das Haftsystem ein Stahlcordhaftsystem auf der Basis von organischen Cobaltsalzen und Verstärkerharzen und mehr als 2,5 phr Schwefel ist, und
- 10 bis 200 phr wenigstens einer Kieselsäure und
- 2 bis 20 phr wenigstens eines Silans mit der allgemeinen Summenformel
I) [(R¹)₃Si-X]ₘSₙ(R²)₂₋ₘ,
wobei die Reste R¹ innerhalb eines Moleküls gleich oder verschieden sein können und Alkoxy-Gruppen mit 1 bis 10 Kohlenstoffatomen oder zyklische Dialkoxy-Gruppen mit 2 bis 10 Kohlenstoffatomen oder Cycloalkoxygruppen mit 4 bis 10 Kohlenstoffatomen oder Phenoxygruppen oder Arylgruppen mit 6 bis 20 Kohlenstoffatomen oder Alkylgruppen mit 1 bis 10 Kohlenstoffatomen oder Alkenylgruppen mit 2 bis 20 Kohlenstoffatomen oder Aralkylgruppen mit 7 bis 20 Kohlenstoffatomen oder Halogenide sind und wobei X eine polare organische harnstoffhaltige Gruppe ist und wobei m den Wert 1 oder 2 annimmt und wobei n eine ganze Zahl von 1 bis 8 ist und wobei R² ein Wasserstoffatom oder eine Acylgruppe mit 1 bis 20 Kohlenstoffatomen ist.

2. Schwefelvernetzbare Kautschukmischung nach Anspruch 1, **dadurch gekennzeichnet, dass** die polare organische harnstoffhaltige Gruppe X wenigstens ein Harnstoff-Derivat als polare Funktionalität aufweist, welches an den beiden Stickstoffatomen eine organische Kohlenwasserstoffgruppe trägt, wobei die Gruppe zwischen dem ersten Stickstoffatom der harnstoffhaltigen Gruppe und dem Schwefel der Sₙ-Gruppe aliphatisch ist und die Gruppe zwischen dem zweiten Stickstoffatom der harnstoffhaltigen Gruppe und dem Siliziumatom der (R¹)₃Si-Gruppe aliphatisch oder aromatisch ist.

3. Schwefelvernetzbare Kautschukmischung nach Anspruch 1, **dadurch gekennzeichnet, dass** die polare organische harnstoffhaltige Gruppe X wenigstens ein Harnstoff-Derivat als polare Funktionalität aufweist, welches an den beiden Stickstoffatomen eine organische Kohlenwasserstoffgruppe trägt, wobei die Gruppe zwischen dem ersten Stickstoffatom der harnstoffhaltigen Gruppe und dem Schwefel der Sₙ-Gruppe aliphatisch ist und die Gruppe zwischen dem zweiten Stickstoffatom der harnstoffhaltigen Gruppe und dem Siliziumatom der (R¹)₃Si-Gruppe aliphatisch ist

4. Schwefelvernetzbare Kautschukmischung nach Anspruch 1, **dadurch gekennzeichnet, dass** die polare organische harnstoffhaltige Gruppe X ein 1-Ethyl-3-Propyl-Harnstoff-Rest ist.

5. Schwefelvernetzbare Kautschukmischung nach einem der vorherigen Ansprüche, **dadurch gekennzeichnet, dass** das Silan ein Gemisch mit n = 1,8 bis 2,3 ist und wenigstens das Silan gemäß Formel VI) zu mehr als 50 Gew.-% in dem Silangemisch enthalten ist:

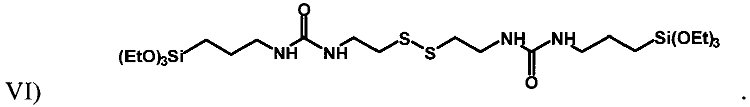

6. Schwefelvernetzbare Kautschukmischung nach einem der vorherigen Ansprüche, **dadurch gekennzeichnet, dass** sie 5 bis 30 phr wenigstens eines Butadien-Kautschuks und 70 bis 95 phr wenigstens eines natürlichen und/oder synthetischen Polyisoprens enthält.

7. Schwefelvernetzbare Kautschukmischung nach einem der vorherigen Ansprüche, **dadurch gekennzeichnet, dass** sie 40 bis 80 phr Kieselsäure enthält.

8. Fahrzeugreifen, **dadurch gekennzeichnet, dass** er in wenigstens einem Bauteil eine schwefelvernetzbare Kautschukmischung nach einem der vorhergehenden Ansprüche enthält.

9. Fahrzeugreifen nach Anspruch 8, **dadurch gekennzeichnet, dass** es sich bei dem Bauteil um eine Festigkeitsträgerlage, insbesondere eine Gürtellage und/oder eine Karkasslage und/oder eine Gürtelbandage und/oder einen Wulstkern und/oder einen Wulstkernverstärker handelt.

10. Fahrzeugreifen nach Anspruch 9, **dadurch gekennzeichnet, dass** die Festigkeitsträger metallische Festigkeitsträger sind.

11. Fahrzeugreifen nach Anspruch 8, **dadurch gekennzeichnet, dass** es sich bei dem Bauteil um ein inneres Bauteil handelt, wie insbesondere eine Laufstreifenunterplatten und/oder ein Gürtelkantenstreifen und/oder ein Wulststreifen.

12. Verwendung einer schwefelvernetzbaren Kautschukmischung nach einem der Ansprüche 1 bis 7 in Fahrzeugreifen zur Verbesserung der Haltbarkeit von Fahrzeugreifen.

## Claims

1. Sulfur-crosslinkable rubber mixture comprising
- at least one diene rubber and
- at least one bonding system, wherein the bonding system is a steel cord bonding system based on organic cobalt salts and reinforcer resins and more than 2.5 phr sulfur, and
- 10 to 200 phr of at least one silica and
- 2 to 20 phr of at least one silane having the general empirical formula
I) [(R¹)₃Si-X]ₘSₙ(R²)₂₋ₘ
where the R¹ radicals within a molecule may be the same or different and are alkoxy groups having 1 to 10 carbon atoms or cyclic dialkoxy groups having 2 to 10 carbon atoms or cycloalkoxy groups having 4 to 10 carbon atoms or phenoxy groups or aryl groups having 6 to 20 carbon atoms or alkyl groups having 1 to 10 carbon atoms or alkenyl groups having 2 to 20 carbon atoms or aralkyl groups having 7 to 20 carbon atoms or halides, and where X is a polar organic urea-containing group and where m assumes the value of 1 or 2 and where n is an integer from 1 to 8 and where R² is a hydrogen atom or an acyl group having 1 to 20 carbon atoms.

2. Sulfur-crosslinkable rubber mixture according to Claim 1, **characterized in that** the polar organic urea-containing X group has at least one urea derivative as a polar functionality that bears an organic hydrocarbyl group on the two nitrogen atoms, where the group between the first nitrogen atom of the urea-containing group and the sulfur of the Sₙ group is aliphatic and the group between the second nitrogen atom of the urea-containing group and the silicon atom of the (R¹)₃Si group is aliphatic or aromatic.

3. Sulfur-crosslinkable rubber mixture according to Claim 1, **characterized in that** the polar organic urea-containing X group has at least one urea derivative as a polar functionality that bears an organic hydrocarbyl group on the two nitrogen atoms, where the group between the first nitrogen atom of the urea-containing group and the sulfur of the Sₙ group is aliphatic and the group between the second nitrogen atom of the urea-containing group and the silicon atom of the (R¹)₃Si group is aliphatic.

4. Sulfur-crosslinkable rubber mixture according to Claim 1, **characterized in that** the polar organic urea-containing X group is a 1-ethyl-3-propylurea radical.

5. Sulfur-crosslinkable rubber mixture according to any of the preceding claims, **characterized in that** the silane is a mixture with n = 1.8 to 2.3 and at least the silane of formula VI) is present in the silane mixture to an extent of more than 50% by weight:

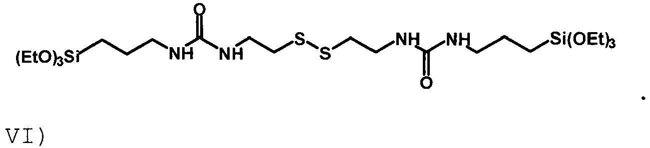

6. Sulfur-crosslinkable rubber mixture according to any of the preceding claims, **characterized in that** it contains 5 to 30 phr of at least one butadiene rubber and 70 to 95 phr of at least one natural and/or synthetic polyisoprene.

7. Sulfur-crosslinkable rubber mixture according to any of the preceding claims, **characterized in that** it contains 40 to 80 phr of silica.

8. Vehicle tyre, **characterized in that** it contains a sulfur-crosslinkable rubber mixture according to any of the preceding claims in at least one component.

9. Vehicle tyre according to Claim 8, **characterized in that** the component is a strength member ply, especially a belt ply and/or a carcass ply and/or a belt bandage and/or a bead core and/or a bead core reinforcement.

10. Vehicle tyre according to Claim 9, **characterized in that** the strength members are metallic strength members.

11. Vehicle tyre according to Claim 8, **characterized in that** the component is an inner component, such as, in particular, an undertread and/or a belt edge strip and/or a bead strip.

12. Use of a sulfur-crosslinkable rubber mixture according to any of Claims 1 to 7 in vehicle tyres for improvement of the service life of vehicle tyres.

## Revendications

1. Mélange de caoutchouc réticulable au soufre, contenant :
- au moins un caoutchouc diénique et
- au moins un système d'adhésion, le système d'adhésion étant un système d'adhésion de câbles d'acier à base de sels de cobalt organiques et de résines renforçantes et plus de 2,5 pce de soufre, et
- 10 à 200 pce d'au moins une silice, et
- 2 à 20 pce d'au moins un silane ayant la formule globale générale :
I) [(R¹)₃Si-X]ₘSₙ(R²)₂₋ₘ
dans laquelle les radicaux R¹ dans une molécule peuvent être identiques ou différents, et sont des groupes alcoxy de 1 à 10 atomes de carbone ou des groupes dialcoxy cycliques de 2 à 10 atomes de carbone, ou des groupes cycloalcoxy de 4 à 10 atomes de carbone, ou des groupes phénoxy, ou des groupes aryle de 6 à 20 atomes de carbone, ou des groupes alkyle de 1 à 10 atomes de carbone, ou des groupes alcényle de 2 à 20 atomes de carbone, ou des groupes aralkyle de 7 à 20 atomes de carbone, ou des halogénures, et dans laquelle X est un groupe organique polaire contenant de l'urée, et dans laquelle m prend la valeur 1 ou 2, et dans laquelle n est un nombre entier de 1 à 8, et dans laquelle R² est un atome d'hydrogène ou un groupe acyle de 1 à 20 atomes de carbone.

2. Mélange de caoutchouc réticulable au soufre selon la revendication 1, **caractérisé en ce que** le groupe organique polaire contenant de l'urée X comprend au moins un dérivé d'urée en tant que fonctionnalité polaire, qui porte un groupe hydrocarboné organique sur les deux atomes d'azote, le groupe entre le premier atome d'azote du groupe contenant de l'urée et le soufre du groupe Sₙ étant aliphatique, et le groupe entre le deuxième atome d'azote du groupe contenant de l'urée et l'atome de silicium du groupe (R¹)₃Si étant aliphatique ou aromatique.

3. Mélange de caoutchouc réticulable au soufre selon la revendication 1, **caractérisé en ce que** le groupe organique polaire contenant de l'urée X comprend au moins un dérivé d'urée en tant que fonctionnalité polaire, qui porte un groupe hydrocarboné organique sur les deux atomes d'azote, le groupe entre le premier atome d'azote du groupe contenant de l'urée et le soufre du groupe Sₙ étant aliphatique, et le groupe entre le deuxième atome d'azote du groupe contenant de l'urée et l'atome de silicium du groupe (R¹)₃Si étant aliphatique.

4. Mélange de caoutchouc réticulable au soufre selon la revendication 1, **caractérisé en ce que** le groupe organique polaire contenant de l'urée X est un radical 1-éthyl-3-propyl-urée.

5. Mélange de caoutchouc réticulable au soufre selon l'une quelconque des revendications précédentes, **caractérisé en ce que** le silane est un mélange avec n = 1,8 à 2,3, et au moins le silane selon la formule VI) est contenu à hauteur de plus de 50 % en poids dans le mélange de silanes :

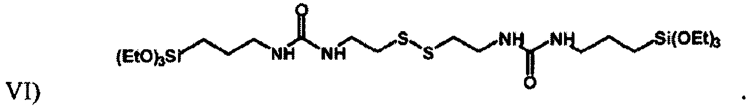

6. Mélange de caoutchouc réticulable au soufre selon l'une quelconque des revendications précédentes, **caractérisé en ce qu'**il contient 5 à 30 pce d'au moins un caoutchouc de butadiène et 70 à 95 pce d'au moins un polyisoprène naturel et/ou synthétique.

7. Mélange de caoutchouc réticulable au soufre selon l'une quelconque des revendications précédentes, **caractérisé en ce qu'**il contient 40 à 80 pce de silice.

8. Pneu de véhicule, **caractérisé en ce qu'**il contient un mélange de caoutchouc réticulable au soufre selon l'une quelconque des revendications précédentes dans au moins un composant.

9. Pneu de véhicule selon la revendication 8, **caractérisé en ce que** le composant consiste en une couche de renforcement, notamment une couche de ceinture et/ou une couche de carcasse et/ou un bandage de ceinture et/ou une tringle de pneu et/ou un renfort de tringle de pneu.

10. Pneu de véhicule selon la revendication 9, **caractérisé en ce que** les renforcements sont des renforcements métalliques.

11. Pneu de véhicule selon la revendication 8, **caractérisé en ce que** le composant consiste en un composant intérieur, tel que notamment une sous-plaque de bande de roulement et/ou une bande de bord de ceinture et/ou une bande de bourrelet.

12. Utilisation d'un mélange de caoutchouc réticulable au soufre selon l'une quelconque des revendications 1 à 7 dans des pneus de véhicules pour améliorer la durée de vie de pneus de véhicules.
